# EUROPEAN PATENT APPLICATION

(11) **EP 2 027 897 A1**
(43) Date of publication of application: **25.02.2009**
(21) Application number: 07737208.4
(22) Date of filing: 23.05.2007
(51) Int. Cl.: A63F 13/00, A63F 13/02, A63F 13/10, A63F 13/12

(54) **GAME MACHINE HAVING PLAYER CHANGE OPERATION FUNCTION**

(30) Priority: 25.05.2006 JP 2006145842
(71) Applicant: Sega Corporation, Tokyo 144-8531 (JP)
(72) Inventor: SUGIMORI, Yuji, Ohta-ku, Tokyo 144-8531 (JP); YASHIMA, Oto, Ohta-ku, Tokyo 144-8531 (JP); AKATSUKA, Masahiko, Ohta-ku, Tokyo 144-8531 (JP)
(74) Representative: Gibbs, Christopher Stephen
(86) International application number: PCT/JP2007/000552
(87) International publication number: WO 2007/138739

(57) **Abstract**

A game unit realizes alternation of players who control to move a position of an object of a common operation target in a virtual space. A position of the object in response to an operation signal from a validated operation device corresponding to one game player is detected whether the object has collided with another object in the virtual space, and when the collision of the object has been detected, an alternation condition is satisfied, and alternation processing is performed so that an operation signal from an operation device corresponding to another player different from the operation device corresponding to the one game player is validated.

## Description

### FIELD

The present invention relates to a game unit using a player alternation operation function, enabling a plurality of game players to operate a common operation target in alternation.

### BACKGROUND

In recent years, a network game system becomes popular, with which a plurality of players play a match game using a game unit connected to a network such as the Internet.

In such a network game system, it has been proposed to operate characters, that are common operation targets, in the game by setting a group among particular game devices (Patent document 1: Japanese Unexamined Patent Publication No. 2002-239246). In Patent document 1, it has been shown that transfer of an operation right from a player, who inputs operation signals from one game device, to another player, who inputs operation signals from another game device, is processed based on whether or not a predetermined reference point to take turns or alternate the operation right between the players reaches.

In another Patent document 2 (International Patent Publication WO 2005/030355), there has been proposed a game system in which a plurality of computers are connected to a server via a network, and signals for operating a common character by a plurality of players are sent to the server from each computer, so as to execute a common game.

In the above Patent document 2, when an alternation condition is satisfied in the game system, it has been shown that, by inhibiting operations of one player, the operations are switched to another player.

Further, each invention described in the above Patent document 1 and Patent document 2 has such an aspect that each game is played using game devices belonging to individual players connected to the network.

Meanwhile, as a game unit for executing a game simulating a car racing game, there is a game unit installed in game facilities to execute the car racing game, for example. Also, there are cases that different game facilities are connected to a network, and accordingly, game units in different game facilities are connected via the network.

In either case, a plurality of model (car) units having the sizes close to real cars are disposed in the game unit installed in each game facility. Each game player sits on a driving seat of each race car, and executes a game by watching images or characters on a monitor displayed by a program, and operating operation means such as steering wheel, shift lever and accelerator pedal provided, paying attention to the racing course and preceding cars, so as to compete to reach the goal in a shortest time with a small number of times of collisions.

Further, there is a known racing game unit installed in such game facilities by which a car racing game is executed between a plurality of players, particularly two players sitting on a race car model.

In such the game unit, an operation device for sending operation signals to a controller to control the progress of the game by a game program is commonly provided for two players, and in the game processing, the alternation of players is not processed. In other words, with the provision of only operation device common to two players, operations by the common operation device can be switched or alternated arbitrarily between the two players, without relationship to the progress of the game.

### SUMMARY

Accordingly, in the above-mentioned game unit installed in the game facilities for executing a racing game, when the operations can be alternated arbitrarily between two players by common operation means with no relationship to the progress of the game, it is difficult to produce an effect to continue the game through each skill of the two players. In other words, it is difficult to make the respective two players enhance a sense of participation and effort to obtain a high score in the racing game. As a result, one player tends to play an auxiliary role.

On the other hand, the inventions described in the above Patent documents 1 and 2 set up a virtual racing game space between a plurality of game units which are connected via the network and used individually. Therefore, it is not possible to apply such the inventions described in Patent documents 1, 2 to a racing game unit to be installed to game facilities.

Accordingly, it is an object of the present invention to provide a game unit realizing operation alternation among a plurality of players in a game unit having one object moving in a virtual space to be a common operation target to the plurality of players at a model unit placed in a common real space.

A first aspect of the present invention to solve the above objects is a game unit, which comprises: an image generation unit to generate object images viewed from an arbitrary visual point in a virtual space; a display unit to display the object images generated by the image generation unit; a plurality of operation devices provided correspondingly to each of a plurality of game players who operate movement of an object, which is a common operation target to be operated by the plurality of game players; and a control unit to execute a game program for moving the object of the common operation target in response to operation signals from the plurality of operation devices, wherein the control unit varies a position of the object of the common operation target in the virtual space in response to an operation signal from a validated operation device corresponding to one game player among the plurality of operation devices, and detects whether the object of the common operation target has collided with another object in the virtual space, and wherein when the collision of the object has been detected, the control unit determines that an alternation condition is satisfied, and performs alternation processing by which the variation of positions of the object of the common operation target in the virtual space is enabled, in response to an operation signal from an operation device corresponding to another player different from the operation device corresponding to the one game player.

In the above game unit, the control unit may control not to execute the alternation processing from a time point of even determining that an alternation condition has newly been satisfied to a lapse of a predetermined time.

In the above game unit, the control unit may control not to execute the alternation processing until the object of the common operation target moves a predetermined coordinate distance from the object position in the virtual space, located at the time of determining that an alternation condition has newly been satisfied.

A second aspect of the present invention to solve the above objects is a game unit, which comprises: an image generation unit to generate object images viewed from an arbitrary visual point in a virtual space; a display unit to display the object images generated by the image generation unit; a plurality of operation devices provided correspondingly to each of a plurality of game players who operate movement of an object, which is a common operation target to be operated by the plurality of game players; and a control unit to execute a game program for moving the object of the common operation target in response to operation signals from the plurality of operation devices, wherein the control unit varies a position of the object of the common operation target in the virtual space in response to an operation signal from a validated operation device corresponding to one game player among the plurality of operation devices, and detects whether the object of the common operation target has collided with another object in the virtual space, and wherein when the collision of the object has been detected, the control unit calculates a moving speed and a moving direction of the object of the common operation target at the time of the collision, and according to at least one of the information sets of the moving speed and the moving direction, the control unit performs alternation processing by which the variation of positions of the object of the common operation target in the virtual space is enabled, in response to an operation signal from an operation device corresponding to another player different from the operation device corresponding to the one game player.

In the above game unit, a steering wheel as the operation device and a sensor to detect an operation angle of the steering wheel are provided, and on deciding that the alternation condition is satisfied, in a period before starting execution of the alternation processing, the control unit calculates an inclination of the steering wheel, being included in the operation device corresponding to the other player, relative to a criterion, based on the operation angle of the steering wheel, being included in the operation device corresponding to the one player, detected by the sensor, and makes the image generation unit generate an image including the steering wheel, being included in the operation device corresponding to the other player, having the calculated inclination relative to the criterion, and display on the display unit.

In the above game unit, in response to the operation signal from the operation device corresponding to the other player different from the operation device corresponding to the one player, the control unit makes the display unit display a notification to the effect that an alternation condition from the one player to the other player occurs, in a period before starting the alternation processing execution enabling variation of the object position of the common operation target in the virtual space.

In the above game unit, on deciding that the alternation condition is satisfied, in response to the operation signal from the operation device corresponding to the other player different from the operation device corresponding to the one player, the control unit generates a reaction force on the operation device corresponding to the other player in a plurality of periodic durations, in the period before starting the alternation processing execution enabling variation of the object position of the common operation target in the virtual space, and adds the reaction force on the operation device corresponding to the other player, by gradually varying in the plurality of periodic durations so as to approach a reaction force corresponding to the magnitude of the reaction force having been added to the operation device corresponding to the one player.

A third aspect of the present invention to solve the above objects is a game system having a plurality of game units mutually sharing game information through a communication means, each of the plurality of game units, which comprises: an image generation unit to generate object images viewed from an arbitrary visual point in a virtual space; a display unit to display the object images generated by the image generation unit; a plurality of operation devices provided correspondingly to each of a plurality of game players who operate movement of an object, which is a common operation target to be operated by the plurality of game players; and a control unit to execute game program by receiving game information transmitted from another game unit via the communication means, for moving objects in the virtual space, which are an object of a common operation target operated by a plurality of players in one game unit, an object of a common operation target operated by a plurality of players in another game unit, and an object operated by the control unit according to the game program, wherein the control unit in the one game unit varies a position of the object of the common operation target in the virtual space in response to an operation signal from a validated operation device corresponding to one game player among the plurality of operation devices, and detects whether the object of the common operation target has collided with another object in the virtual space, and wherein when the other object having collided is the object operated by the control unit according to the game program, on deciding that an alternation condition is satisfied when the collision of the object has been decided, executes alternation processing enabling variation of the object position of the common operation target in the virtual space, in response to an operation signal from the operation device corresponding to the other player different from the operation device corresponding to the one player, and when the other object having collided is the object of the common operation target to the plurality of players in the other game unit, continues to execute processing to vary the object position of the common operation target in the virtual space, in response to the operation signal from the operation device corresponding to the one player.

A fourth aspect of the present invention to solve the above objects is a game program stored in a storage medium, which is enabled to read out by a control unit of a game unit, which comprises an image generation unit to generate object images viewed from an arbitrary visual point in a virtual space; a display unit to display the object images generated by the image generation unit; a plurality of operation devices provided correspondingly to each of a plurality of game players who operate movement of an object, which is a common operation target to be operated by the plurality of game players; and the control unit to execute a game program for moving the object of the common operation target in response to operation signals from the plurality of operation devices, when the program is executed, the control unit, which performs: varying a position of the object of the common operation target in the virtual space in response to an operation signal from a validated operation device corresponding to one game player among the plurality of operation devices, and detecting whether the object of the common operation target has collided with another object in the virtual space, wherein when the collision of the object has been detected, the control unit determines that an alternation condition is satisfied, and performs alternation processing by which the variation of positions of the object of the common operation target in the virtual space is enabled, in response to an operation signal from an operation device corresponding to another player different from the operation device corresponding to the one game player.

According to the present invention having the above-mentioned features, it is possible to appropriately alternate the validity of operations by a plurality of players in a model unit placed in a common real space. By this, it is possible to make each player maintain interest in a common control object of a game to get a high score cooperatively among the plurality of players.

### BRIEF DESCRIPTION OF DRAWINGS

FIG. 1 is a diagram illustrating an outer front view of a game unit for performing a car race to which the present invention is applied.
FIG. 2 is a diagram when the game unit in FIG. 1 is viewed from above the upper face.
FIG. 3 shows one common cockpit model form.
FIG. 4 is a perspective view for comprehensive understanding of one cockpit model mechanism shown correspondingly to FIG. 3.
FIG. 5 is a diagram illustrating that the application of the present invention is not limited to a game unit provided in one of the game facilities.
Fig. 6 is a functional block diagram corresponding to the configuration shown in FIG. 1.
FIG. 7 shows an exemplary configuration of game board shown in FIG. 6.
FIG. 8 is a diagram illustrating the functions of I/O board in collaboration with game board, of which exemplary configuration is shown in FIG. 7, and actuator control board.
FIG. 9 is a flow from the start of the game to the completion of the game.
FIG. 10 is an operation flow of player (driver) alternation event processing in FIG. 9.
FIG. 11 shows examples of the driver alternation conditions.
FIG. 12A shows an exemplary configuration of notification process standby processing period (No. 1).
FIG. 12B shows an exemplary configuration of notification process standby processing period (No. 2).
FIG. 12C shows an exemplary configuration of notification process standby processing period (No. 3).

### DESCRIPTION OF EMBODIMENT(S)

The preferred embodiments are described hereinafter referring to the charts and drawings. However, it is noted that the technical scope of the invention is not limited to the embodiments described below.

In the following, particularly an example of a car racing game is described as an embodiment, and however, the application of the invention is not limited to the car racing game. For example, it is also possible to apply the present invention to a case that a plurality of players take seats at a model unit (cockpit) for use in the races of a boat race etc. as another example, and that one object appearing on the racing game is to be an operation target common to the plurality of players.

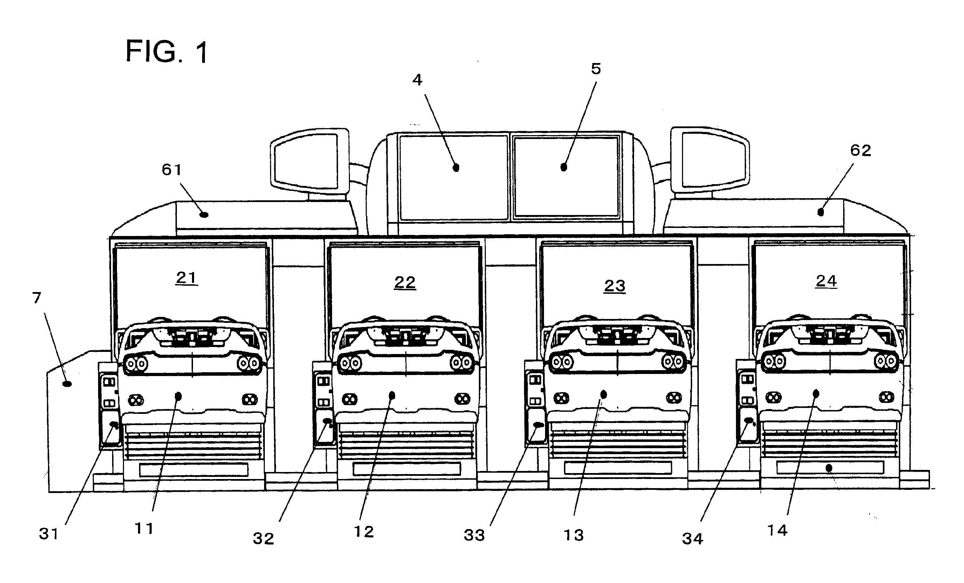

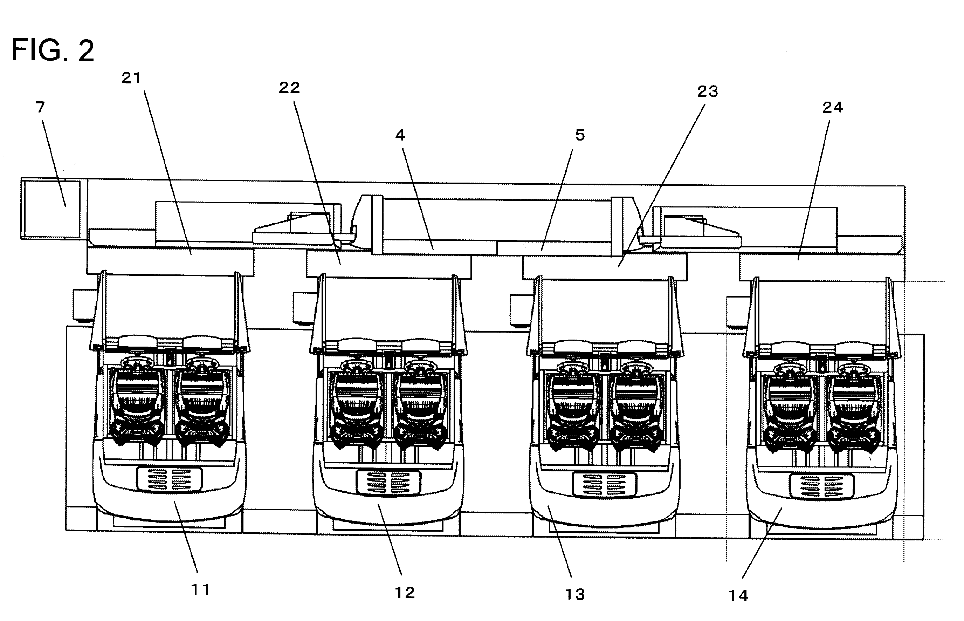

FIG. 1 is a diagram illustrating an outer front view of a game unit for performing a car race to which the present invention is applied. Also, FIG. 2 is a diagram when the similar game unit is viewed from above the upper face.

Cockpit models 11-14 of a plurality (four sets as an embodiment) of race cars are provided in parallel.

On each front face of cockpit models 11-14, there are disposed projector screens 21-24 on which each racing course of a three-dimensional virtual space, which is viewed from the self-car as a viewing point is displayed according to the proceeding of a program. Further, coin inlets 31-34 necessary for engaging in the game play are provided on the respective cockpit models 11-14.

On the upper portion of the game system, there are disposed a panel display unit 4, and adjacent thereto, an image display unit 5 for displaying images of the game players or game images. Further, speakers 61, 62 are provided on the left and the right.

In FIGS. 1, 2, a control section 7 for controlling the overall game system in an integrated manner is shown.

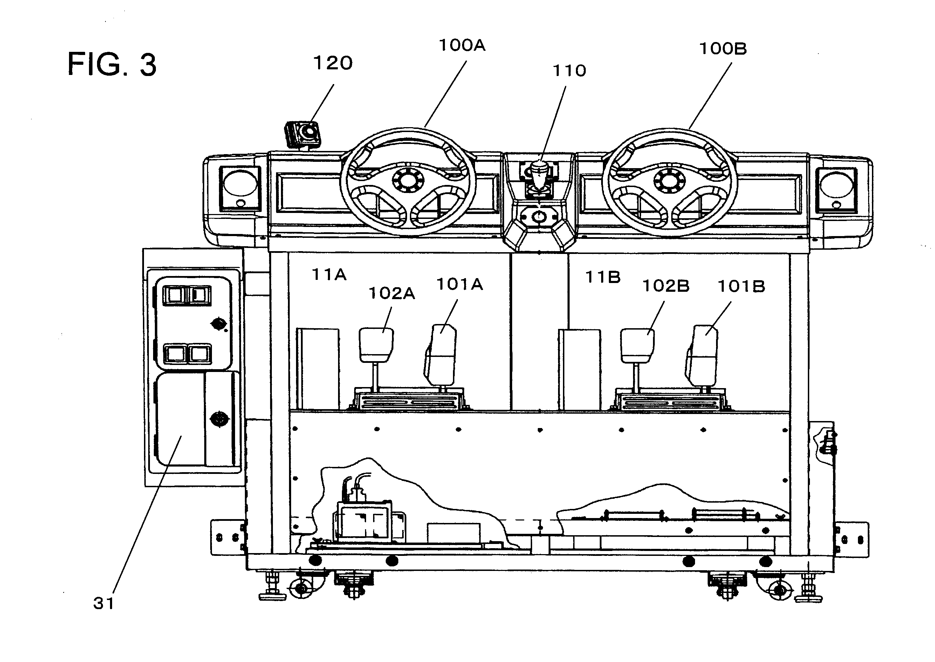

Four cockpit models 11-14 have an identical form, and therefore, one common cockpit model form is shown in FIG. 3.

As an embodiment, two game players sit at one cockpit model as a pair, and operate steering wheels 100A, 100B, accelerator pedals 101A, 101B, brake pedals 102A, 102B as operation means. In addition, a shift lever 110 is used and operated in common by two players.

With such the configuration, as a feature of the invention, output validity of the above provided operation means is controllably alternated or switched as an alternation of players when a predetermined condition is satisfied. Namely, the output of the operation means of the player on only the side having newly alternated is validated. An embodiment of such the player alternation control will be described later.

Further, on the cockpit model in FIG. 3, a wide-angle CCD camera 120 capable of simultaneously imaging two players is provided. A video signal imaged by the above CCD camera 120 is displayed on image display unit 5 shown in FIG. 1.

Also, adjacent to image display unit 5, panel display unit 4 is provided. The above panel display unit 4 displays game information according to the progress of the game, for example, rank information etc. during the race game. Further, on panel display unit 4, there is also shown a display relating the image displayed on image display unit 5 with the game information. Further description on the above display is omitted because there is no direct relation with the present invention.

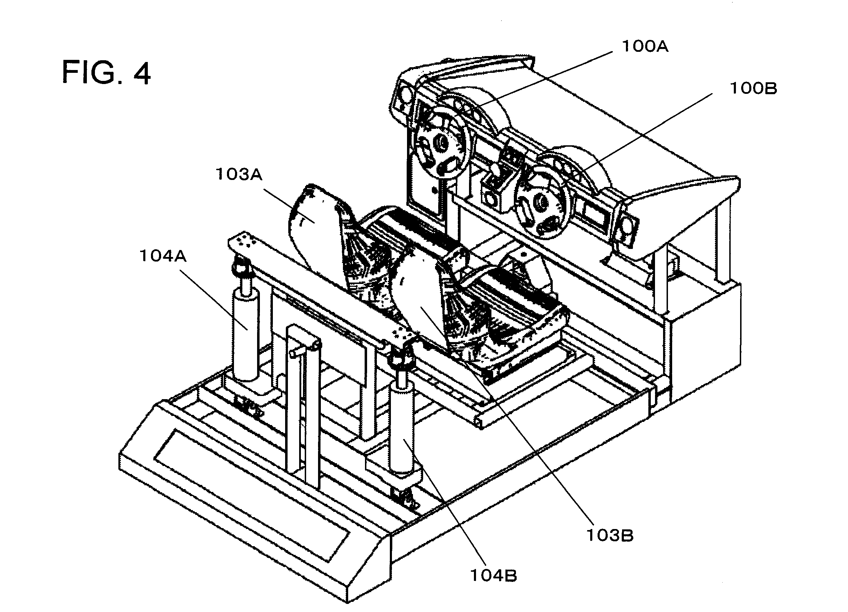

FIG. 4 is a perspective view for comprehensive understanding of one cockpit model mechanism shown correspondingly to FIG. 3. Here, to indicate a vibration mechanism, a rear cover is shown as removed.

In FIG. 4, seats 103A, 104B on which two players can sit include two cylinders 104A, 104B so as to provide the players with virtual sense when performing car race driving by supplying inclination or vibration corresponding to the progress of the game.

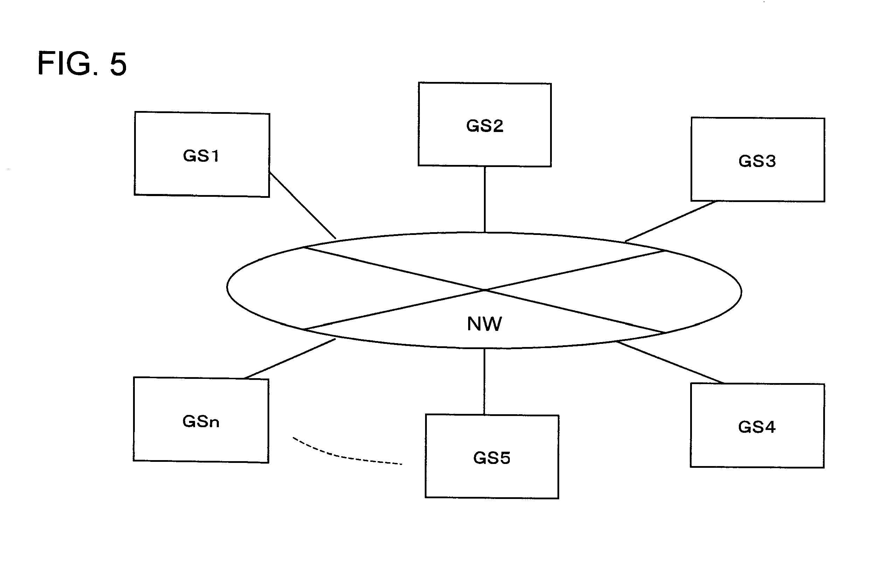

FIG. 5 is a diagram illustrating that the application of the present invention is not limited to a game unit provided in one of the game facilities. Namely, a plurality of game facilities GS 1, GS2, ... GSn are connected via a network NW.

Each game unit shown in FIG. 1 is disposed in each of the plurality of game facilities GS 1, GS2, ... GSn. Not only limited to the four model units shown in FIG. 1, among a plurality of model units being connected via the network NW, a racing game can be executed in a virtual racing space.

In the above case, to control the overall system, a game unit in either one of the game facilities GS1-GSn functions becomes a master game unit (server), while other game units are client, and the master and clients game units are controlled in synchronization.

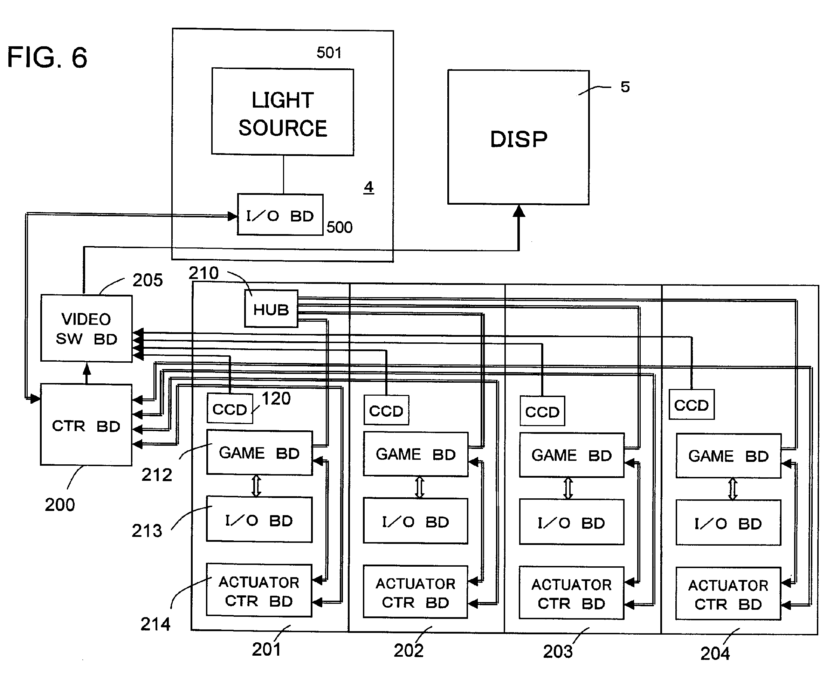

Fig. 6 shows one game unit placed in the game facilities GS2-GSn, illustrating a functional block diagram corresponding to the configuration shown in FIG. 1. Here, in FIG. 6, communication connection with other game units is not shown in the figure, because connection control among the game facilities GS2-GSn has no direct concern with the control in the present invention.

Corresponding to cockpit models 11-14, control circuit function sections 201-204 having similar configurations are provided. Control circuit function sections 201-204 are connected with LAN through a HUB 210. Each of control circuit function sections 201-204 stores programs, and includes a game board 212 to execute the programs.

Each game board 212 in each cockpit model 11-14 is connected to a LAN through hub 210. One game board 212 in each cockpit model 11-14 functions as a master board, collects game data from each game board 212, or a slave board, of other cockpit models, and performs calculation to obtain the ranking. Then, the calculation result is returned from the master board to the game boards, which are to be slave boards, of the cockpit models.

Thus, each game board 212 in each cockpit model 11-14 can share data in the game system at all times. By this, even in the event of a master board failure, any game board 212 having been the slave board of other cockpit models can easily take over a master board.

An input I/O board 213 detects the movement of accelerator pedals 101A, 101B, brake pedals 102A, 102B, and shift lever 110, and receives the corresponding signals, so as to send to game board 212.

Further, with the provision of actuator control boards 214, the game statuses of each cockpit model 11-14 are reported to a main control board 200. In collaboration with main control board 200, actuators (cylinders 104A, 104B: FIG. 4) are controlled to dynamically move corresponding to the progress of the game, so as to provide each game player with a sense of actually driving the car.

Main control board 200 controls a video switch board 205 and an I/O board 500 of panel display unit 4. The above main control board 200 and video switch board 205 are included in control section 7 shown in FIG. 1.

Video switch board 205 inputs an imaging signal of each CCD camera 120 provided in each cockpit model 11-14, and sends a display signal to image display unit 5 by the switch control of main control board 200. Accordingly, on image display unit 5, there is displayed a video image of the game player which is imaged by CCD camera 120 of one of cockpit models 11-14 and switched and selected by video switch board 205.

Further, when a game image is displayed on image display unit 5, in main control board 200, a video signal sent from each actuator control board 214 is selected, which is then sent to image display unit 5 through video switch board 205, and displayed.

Also, to display information signal relative to the image displayed on image display unit 5, main control board 200 sends to I/O board 500 of panel display unit 4.

Based on the signal sent from main control board 200, I/O board 500 sends a light-on control signal to a light source 501 of the corresponding panel display unit 4. By this, information display corresponding to the image displayed on image display unit 5 can be made on panel display unit 4.

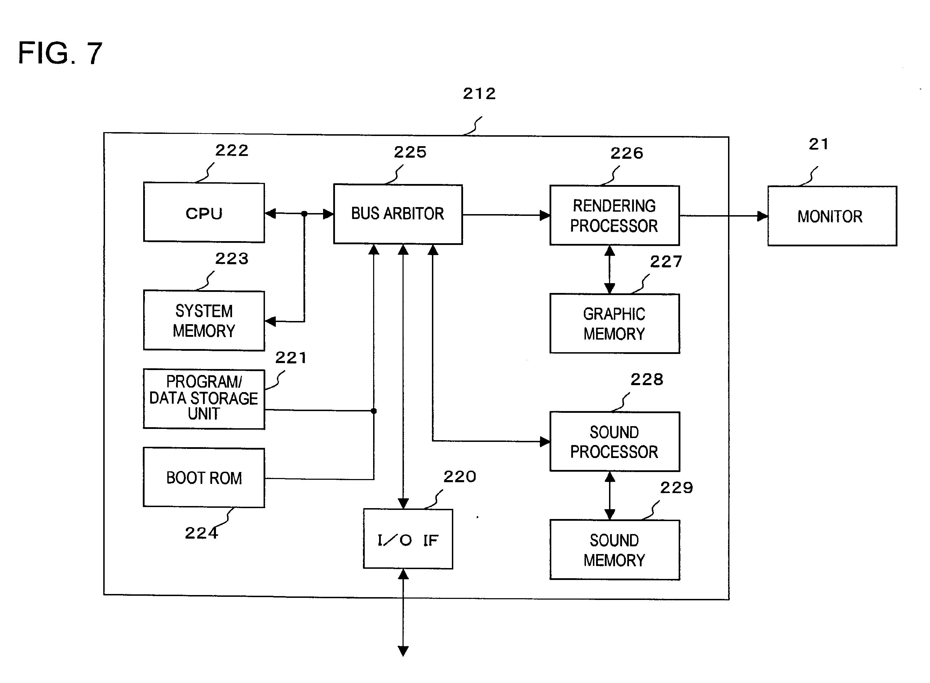

FIG. 7 shows an exemplary configuration of game board 212 shown in FIG. 6. Programs and data (inclusive of video and audio data) are stored in a program/data storage unit 221. The above program/data storage unit may also be configured of an externally attached DVD-ROM etc.

A CPU 222 performs program execution, as well as overall system control, coordinate calculation for image display, etc. A system memory 223 stores programs, data, etc. necessary for CPU 222 to process. A program and a data necessary for initiating game board 212 are stored in a boot ROM 224.

Further, in the game board 212, there is provided a bus arbitor 225 which controls program execution and data flow with devices (I/O board 213 and actuator control board 201) externally connected through an I/O interface 220, and the bus arbiter 225 as well as each bock on the game board 212 is connected to a bus.

A rendering processor 226 is connected to the bus. Rendering processor 226 displays video (movie) data read out from program/data storage unit 221, and images to be generated according to the operation of the players and the progress of the game, on monitors (projector screens) 21, 22, 23 and 24.

Graphic data etc. necessary for rendering processor 226 to generate the images are stored in a graphic memory 227. A sound processor 228 is connected to the bus. Music data read out from program/data storage unit 221 and effective sounds and voices to be generated according to operations by the player and the game progress are generated by sound processor 228, and after being processed by main control board 200, sounds and voices are output on speakers 61, 62.

Sound data etc. necessary for sound processor 228 to generate the effective sounds and voices are stored in a sound memory 229.

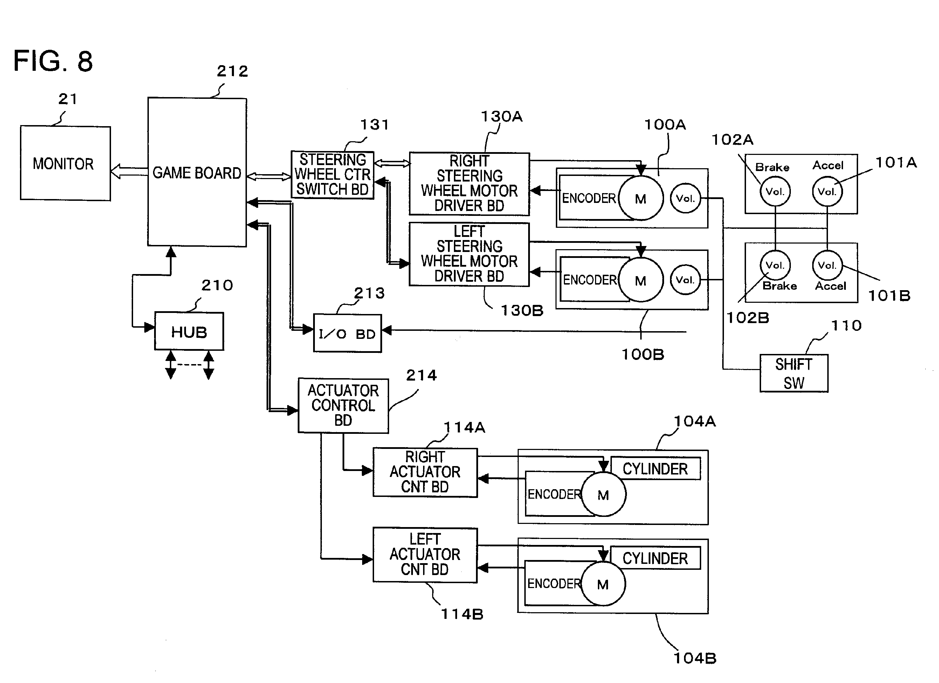

FIG. 8 is a diagram illustrating the functions of I/O board 213 in collaboration with game board 212, of which exemplary configuration is shown in FIG. 7, and actuator control board 214.

Accelerator 101A (101B) and brake 102A (102B) are configured to output each operation signal corresponding to each stepping amount.

Steering wheel 100A (100B) is configured to output an operation signal having an amount corresponding to the operation angle thereof. Further, shift key 110 corresponding to the shift lever outputs an operation signal corresponding to the shift position thereof.

Operation signals based on the player operations on the operation means are input into I/O board 213. I/O board 213 acquires status information from game board 212, namely information indicating which side of the two players is validated, and sends the operation signal from the valid side to game board 212.

Further, game board 212 sends information, indicating which side of the two players is validated, to a steering wheel control switch board 131, which is provided as an attachment to steering wheel 100A (100B), and actuator control board 214.

Based on the information sent from game board 212, steering wheel control switch board 131 sends a drive command to a motor drive board 130A (130B) on the validated steering wheel side at the time of a predetermined condition, so as to supply a motor rotation drive force to steering wheel 100A (100B) to rotate. By this, it is possible to supply a virtual sense of receiving impact to each player during the game driving.

On the other hand, based on the information sent from game board 212, actuator control board 214 sends a drive command to the right or left actuator control board 114A (114B) according to a predetermined program at the time of a predetermined condition, so as to control the vertical movement of cylinder 104A (104B). By this, as shown in FIG. 4, a pitching or rolling motion is given to driver seat 103A (103B), enabling supply of a virtual sense of receiving impact to the car body during running the game.

Here, in the above description, the application of the present invention is not limited to the case of assuming the opponent of the racing competition among the race cars operated among players having seats on four race car models shown in FIG. 1, or among the race cars operated by other players in the different game facilities GS1-GSn through the network NW shown in FIG. 5.

Namely, in each one racing model, it is also possible to advance the game by making a race car, of which movement is controlled by CPU 222 according to a program and image displayed, as an opponent of the racing competition.

Next, as a feature of the present invention, the player change (switch or alternation) control execution in the above-mentioned configuration of the game unit will be described. Additionally, the above alternation control is commonly applied to a case when opponents are either race cars operated by other players or race cars controlled by CPU 222.

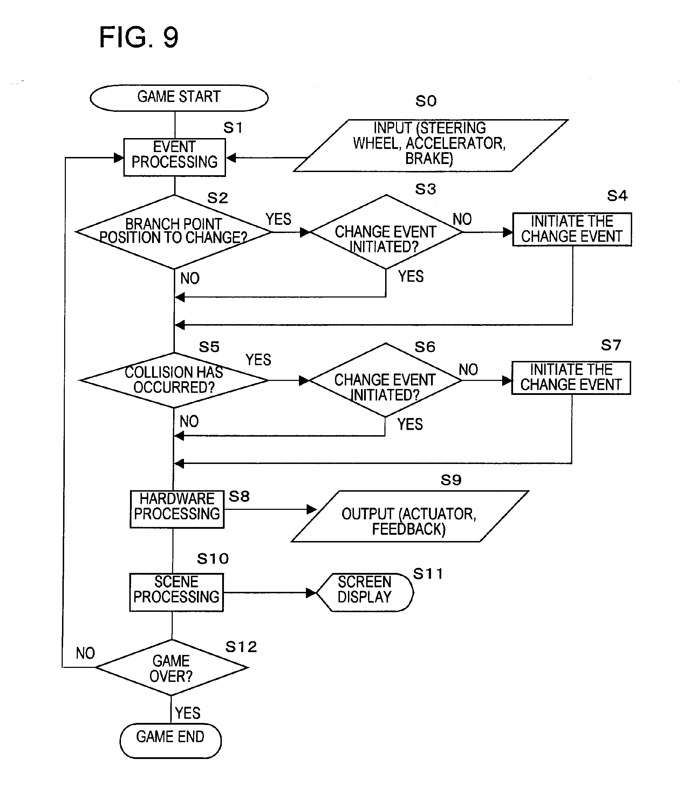

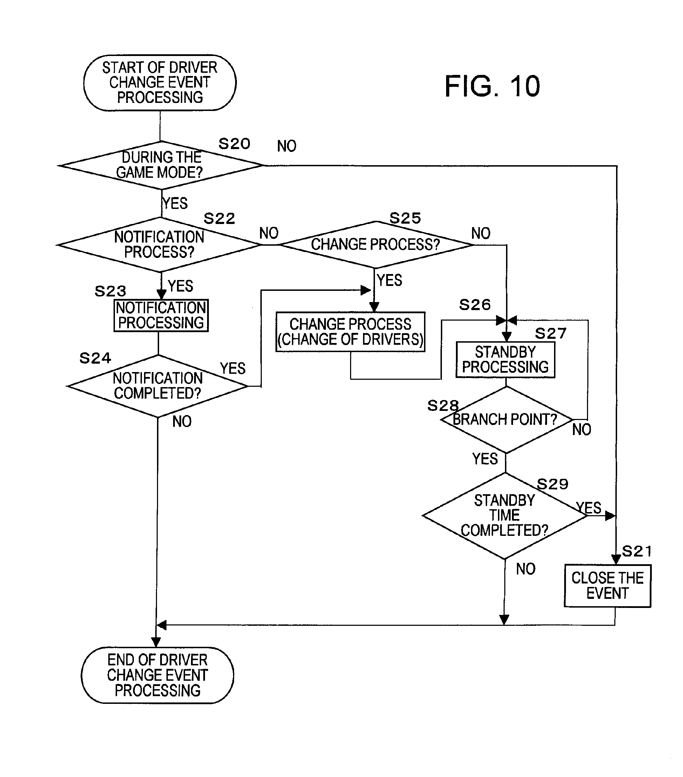

FIGS. 9 and 10 are diagrams illustrating the flow of player alternation control. In particular, FIG. 9 is a flow from the start of the game to the completion of the game, while FIG. 10 is an operation flow of player (driver) alternation event processing in FIG. 9.

The processing shown in FIGS. 9, 10 is executed by controlling CPU 222 using a program stored in program/data storage unit 221 of game board 212.

In FIG. 9, when the game is started, event processing is executed continuously at predetermined time intervals, for example, at the processing intervals of once per frame.

In the event processing, by monitoring an input (step S0) from the operation means (steering wheel, accelerator and brake), image processing in the game according to the program, and also drive processing to the actuator, are performed (step S1). Namely, image processing corresponding to the control of increasing and decreasing the speed of the race car to be operated, and the running direction thereof, etc. are executed.

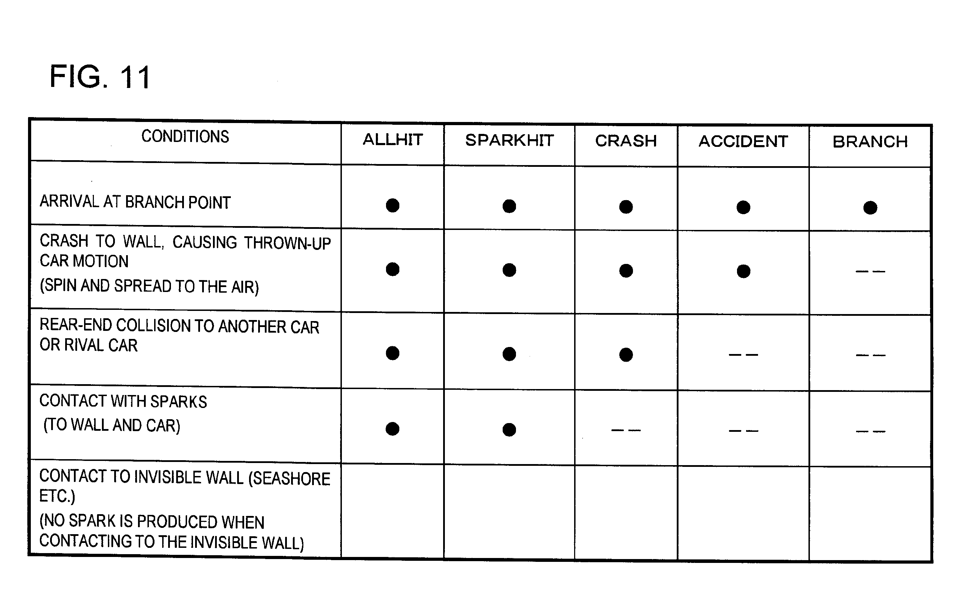

The above event processing detects driver alternation conditions. Examples of the driver alternation conditions are shown in FIG. 11. In FIG. 11, the conditions indicated with ● are the driver alternation conditions.

As one of the above conditions, it is decided whether the arrival has reached to a branch point position (step S2). Namely, at predetermined branch points on the course placed on the halfway of the race, in a case of exceeding an alternation position distance (distance for alternation position adjustment), it is decided that the case concerned is coincident with the alternation condition (YES in step S2).

Also, as another driver alternation condition, the moment of colliding with another car or a wall is decided to be coincident with the alternation condition (YES in step S5).

Additionally, in the game image processing, the decision of the above collision is made when coordinate positions in the virtual space between the car to be operated and the opposite substance, including the other car, the wall or the like, come to have predetermined relationship (for example, become coincident). Further, as another method of deciding collision, as shown in the paragraphs (00027, 0028) of the official gazette of the Japanese Unexamined Patent Publication No. Hei-9-325684, for example, an area (for example, a spherical ball or a box-shaped area) for collision decision, which is provided to cover the object (race car) in the virtual space, is stored in a storage means. Then, by calculating whether or not the above area overlaps with an area covering another object (that is, whether or not a cross point exists) by a control means, it is possible to decide the collision of the object.

When it is decided to be coincident with the driver alternation conditions, it is decided whether or not the respective alternation events are already initiated (step S3, step S6), and in case of a new alternation event (NO in step S3, step S6), alternation event processing is initiated (step S4, step S7).

Also, as shown in the examples of the driver alternation conditions in FIG. 11, it may be possible to perform the alternation processing under the condition of a collision shock state (typically expressed by the direction and the speed of the object movement) of the race car which is the operation target at that time point, in addition to merely the decision of collision.

The alternation event processing in the above steps S4 and S7 is common, and the content of the alternation event processing is shown in the operation flow shown in FIG. 10.

In FIG. 10, the decision of being in a game mode is made (step S20), and in case of not being in the game mode, the event processing is closed (step S21). Here, to be in the game mode signifies a state actually in the middle of the game, namely, a state other than the goal or the game over.

In case of being in the game mode (YES in step S20), it is decided whether being in the process of notification (step S22). In case of the notification process, notification processing is performed (step S23). Through the notification processing, an advance notification of the execution of driver alternation is given to the players during a predetermined period.

On completion of the notification period (YES in step S24), the processing is shifted to a player alternation processing process, that is, the start of executing the alternation processing (step S26).

The player alternation processing is processing to switch the validity/invalidity of operation signals (or to switch inputs) from the operation means corresponding to the players.

When the execution of the player alternation processing (step S26) is completed, a shift to standby processing is made (step S27). The operation signals from the newly alternated player through the alternation processing are validated. However, a predetermined delay period is given to the newly alternated player by the standby processing. Namely, in the delay period, the occurrence of a new alternation event is inhibited.

The reason is that, immediately after the alternation, corresponding processing by the player does not always catch up the game progress. The above process is to protect such the situation.

Accordingly, even if the arrival to the branch point is made in the delay period (YES in step S28), the player alternation event processing is terminated, instead of producing a driver alternation event.

On completion of the standby time (YES in step S29), the event is closed (step S21).

Further, when it is decided to be other than the above-mentioned notification process (NO in step S22), if it is in the alternation process (YES in step S25), a shift to the alternation processing (step S26) is made. On the other hand, if it is not in the alternation process (NO in step S25), a shift to the standby processing (step S27) is made.

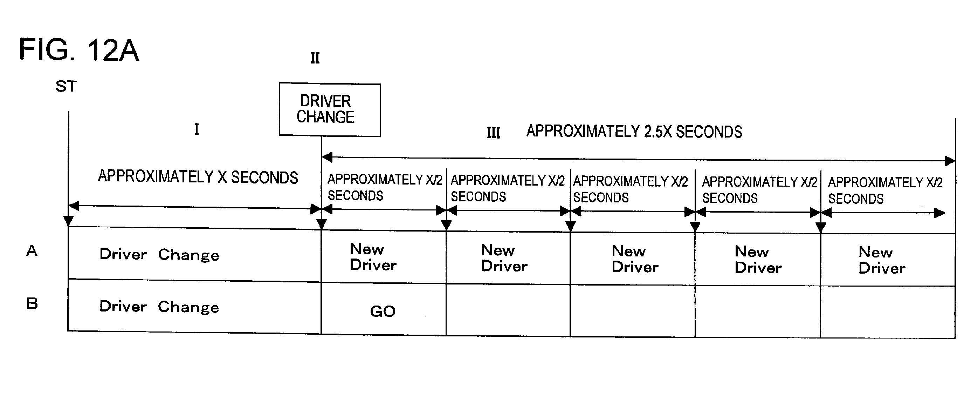

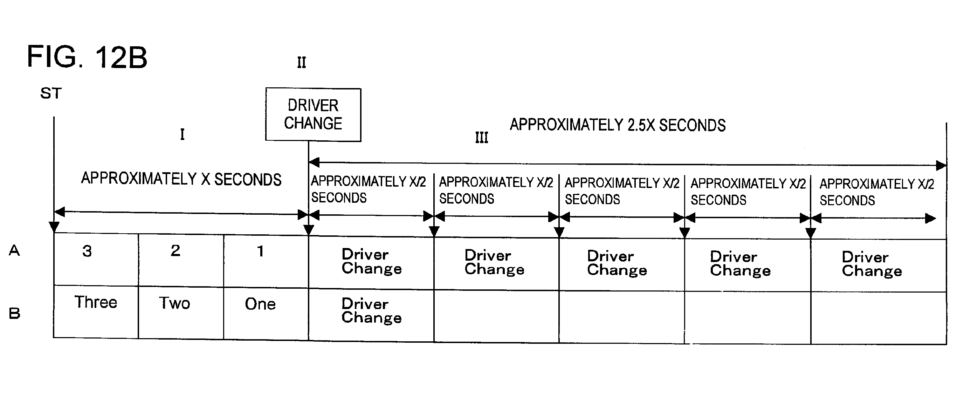

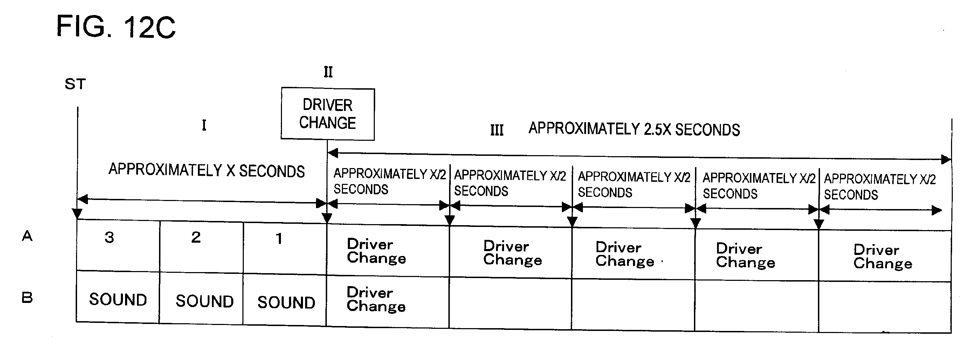

FIGS. 12A-12C show exemplary configurations of notification process I, alternation processing II and processing period III thereafter.

In FIGS. 12A-12C, a row A shows notification messages displayed on monitor 21 (22, 23, 24), and a row B shows messages to be notified to the player by sound.

For example, in FIG. 12A, before the execution timing of player (driver) alternation processing II, in the notification period I, "Driver Alternation" is displayed on monitor 21 and "Driver Alternation" is notified by voice.

On completion of the notification period I, in the alternation processing execution II and thereafter, operation signals from the operation means corresponding to the player having alternated are validated.

Further, in the standby period III, "New Driver" is displayed with repeated blinks on monitor 21, and at the same time, in the first period, indication of "Go" is indicated by voice.

Referring back to FIG. 9, during the game execution in which no alternation event processing is performed, rotation output to steering wheel 100A (100B) and vertical movement output (reaction) of cylinder 104A (104B) corresponding to the player of given validity are controlled according to the program, as described in FIG. 8 (step S8).

At the same time, according to the program, a predetermined scene image corresponding to the game progress is generated and displayed on monitor 21 (22, 23, 24).

The above-mentioned processing process is repeated continuously until the end of the game (YES in step S12).

Here, in FIG. 10, it has been described that the standby processing (FIGS. 12A-12C: III) (step S27) is performed after the execution of the alternation processing (FIGS. 12A-12C: II). As one example thereof, there has been described a case that new alternation processing is not executed even a new alternation processing condition occurs before the lapse of a predetermined time (approximately 2.5X seconds) as shown in FIGS. 12A-12C.

According to the present invention, instead of before the lapse of the predetermined time (approximately 2.5X seconds), it is also possible to control not to perform the alternation processing on the occurrence of a new alternation condition, by defining the standby processing period (III) to be a time when the race car to be operated as a common operation target moves a predetermined coordinate distance from the coordinate position at the time of the alternation processing (FIGS. 12A-12C: II).

Further, when performing the alternation processing II (step S27) in FIG. 10, there has been described the transfer of the operation right on the operation means (changeover to the side on which the output of the operation means is validated). According to the present invention, to increase the continuity of the game, it is preferable to transfer, to the other player after the alternation, the state of the steering wheel also, as an operation means given to one player at the time of change over, namely, either a steering wheel operation angle or a reaction force given to the steering wheel.

However, as the configuration of the present invention, because the operation means is independently configured corresponding to each player, it is difficult for the other player to be alternated to grasp the states (operation angle and reaction force) of the steering wheel at the exact moment of the changeover.

In order to cope therewith, there are provided sensors (encoders 100Aa, 100Ba in the example shown in FIG. 8), which are attached to steering wheels 100A, 100B, for detecting the operation angles. Based on the operation angle of steering wheel 100A, corresponding to the one player, detected by the above-mentioned sensor at the time of deciding the alternation condition is satisfied (YES in steps S2, S5: FIG. 9, and ST: FIGS. 12A-12C), CPU 222 in game board 212 calculates the inclination of steering wheel 100B corresponding to the other player to a criterion. The above calculated inclination state of the steering wheel is displayed on monitor 21. By this, it becomes possible to make the player after the alternation grasp the state of the steering wheel.

Further, to supply the reaction force to the steering wheel, there are provided vibration motors 100Ab, 100Bb attached to steering wheels 100A, 100B. However, to steering wheel 100B corresponding to the other player after the alternation, when supplying, immediately after the alternation, the reaction force having magnitude identical to the reaction force given to steering wheel 100A corresponding to the one player, it is difficult for the other player to cope therewith.

Therefore, when it is decided that the alternation condition is satisfied (ST: FIGS. 12A-12C), the reaction force on the operation means (steering wheel) corresponding to the other player is formed for a plurality of periodic durations until the lapse of a predetermined time X of the aforementioned notification period (I: FIGS. 12A-12C). Then, to the steering wheel corresponding to the other player, the reaction force is added in the above plurality of periodic durations with variations to gradually increase to the magnitude of the reaction force having been given to the operation means corresponding to the one player. This facilitates easy handling by the player after the alternation.

## Claims

1. A game unit comprising:
an image generation unit to generate object images viewed from an arbitrary visual point in a virtual space;
a display unit to display the object images generated by the image generation unit;
a plurality of operation devices provided correspondingly to each of a plurality of game players who operate movement of an object, which is a common operation target to be operated by the plurality of game players; and
a control unit to execute a game program for moving the object of the common operation target in response to operation signals from the plurality of operation devices, wherein
the control unit varies a position of the object of the common operation target in the virtual space in response to an operation signal from a validated operation device corresponding to one game player among the plurality of operation devices, and detects whether the object of the common operation target has collided with another object in the virtual space, and wherein
when the collision of the object has been detected, the control unit determines that an alternation condition is satisfied, and performs alternation processing by which the variation of positions of the object of the common operation target in the virtual space is enabled, in response to an operation signal from an operation device corresponding to another player different from the operation device corresponding to the one game player.

2. The game unit according to claim 1,
wherein the control unit controls not to execute the alternation processing from a time point of even determining that an alternation condition has newly been satisfied to a lapse of a predetermined time.

3. The game unit according to claim 1 or 2,
wherein the control unit controls not to execute the alternation processing until the object of the common operation target moves a predetermined coordinate distance from the object position in the virtual space, located at the time of determining that an alternation condition has newly been satisfied.

4. A game unit comprising:
an image generation unit to generate object images viewed from an arbitrary visual point in a virtual space;
a display unit to display the object images generated by the image generation unit;
a plurality of operation devices provided correspondingly to each of a plurality of game players who operate movement of an object, which is a common operation target to be operated by the plurality of game players; and
a control unit to execute a game program for moving the object of the common operation target in response to operation signals from the plurality of operation devices, wherein
the control unit varies a position of the object of the common operation target in the virtual space in response to an operation signal from a validated operation device corresponding to one game player among the plurality of operation devices, and detects whether the object of the common operation target has collided with another object in the virtual space, and wherein
when the collision of the object has been detected, the control unit calculates a moving speed and a moving direction of the object of the common operation target at the time of the collision, and
according to at least one of the information sets of the moving speed and the moving direction, the control unit performs alternation processing by which the variation of positions of the object of the common operation target in the virtual space is enabled, in response to an operation signal from an operation device corresponding to another player different from the operation device corresponding to the one game player.

5. The game unit according to any of claim 1 through claim 4, further comprising:
a steering wheel as the operation device and a sensor to detect an operation angle of the steering wheel;
wherein, on deciding that the alternation condition is satisfied, in a period before starting execution of the alternation processing, the control unit calculates an inclination of the steering wheel, being included in the operation device corresponding to the other player, relative to a criterion, based on the operation angle of the steering wheel, being included in the operation device corresponding to the one player, detected by the sensor, and
makes the image generation unit generate an image including the steering wheel, being included in the operation device corresponding to the other player, having the calculated inclination relative to the criterion, and display on the display unit.

6. The game unit according to any of claim1 through claim 5,
wherein, in response to the operation signal from the operation device corresponding to the other player different from the operation device corresponding to the one player, the control unit makes the display unit display a notification to the effect that an alternation condition from the one player to the other player occurs, in a period before starting the alternation processing execution enabling variation of the object position of the common operation target in the virtual space.

7. The game unit according to any claim 1 through claim 6,
wherein, on deciding that the alternation condition is satisfied, in response to the operation signal from the operation device corresponding to the other player different from the operation device corresponding to the one player, the control unit generates a reaction force on the operation device corresponding to the other player in a plurality of periodic durations, in the period before starting the alternation processing execution enabling variation of the object position of the common operation target in the virtual space, and adds the reaction force on the operation device corresponding to the other player, by gradually varying in the plurality of periodic durations so as to approach a reaction force corresponding to the magnitude of the reaction force having been added to the operation device corresponding to the one player.

8. A game system having a plurality of game units mutually sharing game information through a communication means, each of the plurality of game units comprising:
an image generation unit to generate object images viewed from an arbitrary visual point in a virtual space;
a display unit to display the object images generated by the image generation unit;
a plurality of operation devices provided correspondingly to each of a plurality of game players who operate movement of an object, which is a common operation target to be operated by the plurality of game players; and
a control unit to execute game program by receiving game information transmitted from another game unit via the communication means, for moving objects in the virtual space, which are an object of a common operation target operated by a plurality of players in one game unit, an object of a common operation target operated by a plurality of players in another game unit, and an object operated by the control unit according to the game program, wherein
the control unit in the one game unit varies a position of the object of the common operation target in the virtual space in response to an operation signal from a validated operation device corresponding to one game player among the plurality of operation devices, and detects whether the object of the common operation target has collided with another object in the virtual space, and wherein
when the other object having collided is the object operated by the control unit according to the game program, on deciding that an alternation condition is satisfied when the collision of the object has been decided, executes alternation processing enabling variation of the object position of the common operation target in the virtual space, in response to an operation signal from the operation device corresponding to the other player different from the operation device corresponding to the one player, and
when the other object having collided is the object of the common operation target to the plurality of players in the other game unit, continues to execute processing to vary the object position of the common operation target in the virtual space, in response to the operation signal from the operation device corresponding to the one player.

9. A program stored in a storage medium, which is enabled to read out by a control unit of a game unit, which comprises an image generation unit to generate object images viewed from an arbitrary visual point in a virtual space; a display unit to display the object images generated by the image generation unit; a plurality of operation devices provided correspondingly to each of a plurality of game players who operate movement of an object, which is a common operation target to be operated by the plurality of game players; and the control unit to execute a game program for moving the object of the common operation target in response to operation signals from the plurality of operation devices, when the program is executed, the control unit performing:
varying a position of the object of the common operation target in the virtual space in response to an operation signal from a validated operation device corresponding to one game player among the plurality of operation devices, and detecting whether the object of the common operation target has collided with another object in the virtual space,
wherein
when the collision of the object has been detected, the control unit determines that an alternation condition is satisfied, and performs alternation processing by which the variation of positions of the object of the common operation target in the virtual space is enabled, in response to an operation signal from an operation device corresponding to another player different from the operation device corresponding to the one game player.
